# EUROPÄISCHE PATENTANMELDUNG

(11) **EP 1 439 343 A1**
(43) Veröffentlichungstag der Anmeldung: **21.07.2004**
(21) Anmeldenummer: 04450003.1
(22) Anmeldetag: 13.01.2004
(51) Int. Cl.: F16L 47/24

(54) **Übergangsstück**

(30) Priorität: 15.01.2003 AT 462003
(71) Anmelder: Polysan Handelsgesellschaft m.b.H., 3500 Krems (AT)
(72) Erfinder: Schnauer, Dietmar, 3492 Engabrunn (AT); Ott, Karl, 3541 Senftenberg (AT)
(74) Vertreter: Itze, Peter, Dipl.-Ing.

(57) **Zusammenfassung**

Ein Übergangsstück zum Verbinden von Kunststoffrohren mit aus metallischen oder sonstigen harten Werkstoffen gefertigten Armaturen, Rohren oder Anschlußstücken für Geräte, insbesondere im Sanitär- und Heizungsbereich, wobei das Übergangsstück eine metallische bzw. aus sonstigen harten Werkstoffen fertigte Anschlußhülse (1) mit wenigstens einem in der Mittelbohrung und/oder an der Außenmantelfläche vorgesehenen Anschlußgewinde (8) aufweist, wobei die Anschlußhülse (1) an dem dem Anschlußgewinde (8) abgewandten Ende mit einem axial verlaufenden umlaufenden Fortsatz (3) zur Verbindung mit einer Verbindungshülse (2) aus Kunststoffmaterial versehen ist und wobei der Fortsatz an der Innenseite und an der Außenseite an der Anschlußhülse (1) je eine umlaufende Schulter (4,5) beläßt und sowohl an der Innenseite als auch an der Außenseite vom Kunststoffmaterial umgossen ist. Hiebei sind an der an der Außenseite und/oder an der an der Innenseite des Fortsatzes (3) umlaufenden Schulter (4,5) zu der zugehörigen Begrenzungsfläche bzw. der Anschlußhülse (1) hin offene Ausnehmungen (6) vorgesehen.

## Beschreibung

Die Erfindung bezieht sich auf ein Übergangsstück zum Verbinden von Kunststoffrohren mit aus metallischen bzw. sonstigen harten Werkstoffen gefertigten Armaturen, Rohren oder Anschlußstücken für Geräte, insbesondere im Sanitär- und Heizungsbereich, wobei das Übergangsstück eine metallische bzw. aus sonstigem hartem Werkstoff gefertigte Anschlußhülse mit wenigstens einem in der Mittelbohrung und/oder an der Außenmantelfläche vorgesehenen Anschlußgewinde aufweist, wobei die Anschlußhülse an dem dem Anschlußgewinde abgewandten Ende mit einem axial verlaufenden umlaufenden Fortsatz zur Verbindung mit einer Verbindungshülse aus Kunststoffmaterial versehen ist und wobei der Fortsatz an der Innenseite und an der Außenseite an der Anschlußhülse je eine umlaufende Schulter beläßt und sowohl an der Innenseite als auch an der Außenseite vom Kunststoffmaterial umgossen ist.

Derartige Ausbildungen sind bereits lange Stand der Technik, wobei diesen Ausbildungen der Nachteil anhaftet, daß bei Anwendung von Drehkräften eine ausreichende Drehsicherung zwischen Kunststoffteil und Anschlußhülle nicht gegeben ist, was dazu führt, daß sich die Verbindung zwischen Kunststoff und Metall löst und damit die Anschlußstellen undicht werden.

Bei der EP 461 308 B1 ist eine Mitdrehsicherung bereits vorgesehen, u.zw. dadurch, daß an der metallischen Anschlußhülle zackenartige Vorsprünge vorgesehen sind bzw. daß an der Außenwandung der die Kunststoffeinspritzungen umgebenden Mantelfläche Bohrungen vorgesehen sind, wobei diese Bohrungen von innen nach außen mit Kunststoff gefüllt werden. Diese bekannte Ausbildung hat den Nachteil, daß die Wandstärke der Außenseite der Taschen relativ niedrig ist, sodaß die in der Wandung vorgesehenen Bohrungen nur wenig Ansatzfläche zum Verhindern des Mitdrehens geben, wenngleich aufgrund der Anordnung am Außenmantel von dieser "Mitdrehsicherung" aufgrund der Hebelwirkung eine bessere Wirkung angenommen wird. Die an der Innenseite vorgesehenen Zacken sind nur bei der in der genannten EP 461 308 B1 wiedergegebenen Ausführung rationell anbringbar, u.zw. dann, wenn an der umlaufenden taschenartigen Ausnehmung die Innenwandung weiter vorsteht als die Außenwandung der taschenartigen Begrenzungsflächen. Es handelt sich aber bei dieser Ausbildung um eine andere Gattung von Verbindungsstücken zwischen Metallhülse und Kunststoffanguß.

Der Erfindung liegt die Aufgabe zugrunde, bei einer Ausbildung der eingangs genannten Art Mitdrehsicherungen zu schaffen, die einerseits leicht anzubringen sind und anderseits eine entsprechende Haltewirkung besitzen.

Diese Aufgabe wird erfindungsgemäß dadurch gelöst, daß an der an der Außenseite und/oder an der an der Innenseite des Fortsatzes umlaufenden Schulter zu der zugehörigen Begrenzungsfläche bzw. der Anschlußhülse hin offene Ausnehmungen vorgesehen sind. Dies hat den Vorteil, daß die Angüsse, die die Ausnehmungen ausfüllen, entsprechend lang ausgebildet sein können, wodurch entsprechend größere Kräfte aufgenommen werden können. Durch die nach außen offene Ausbildung wird erreicht, daß beim Einspritzen des Kunststoffmaterials die gesamte, in der Ausnehmung enthaltene Luft entweichen kann, sodaß massive Kunststofffortsätze entstehen, die keine Lufteinschlüsse enthalten.

Bei einer besonders einfach herzustellenden Ausbildung können die Ausnehmungen durch in Achsrichtung bzw. annähernd in Achsrichtung der Anschlußhülse eingebrachte Bohrungen bzw. Rundfräsungen gebildet sein, wobei die Entfernung der Mittelpunkte der Bohrungen bzw. Fräsungen von der zugehörigen äußeren bzw. inneren Begrenzungsfläche geringer als der Radius der Bohrung bzw. Fräsung ist. Für einen besonderen Halt können die Ausnehmungen durch radial oder achsial verlaufende, insbesondere einen schwalbenschwanzförmigen Querschnitt aufweisende Einstiche bzw. Einformungen gebildet sein.

In der Zeichnung sind Ausführungsbeispiele des Erfindungsgegenstandes dargestellt.
Fig. 1 zeigt eine Seitenansicht einer ersten Ausführungsform.
Fig. 2 zeigt diese Ausführungsform in Unteransicht, jedoch bei weggelassenem Kunststoffanguß.
Fig. 3 ist ein Schnitt entlang der Längsmittelebene gemäß Fig. 1.
Fig. 4 ist eine Seitenansicht einer zweiten Ausführungsform.
Fig. 5 gibt die Unteransicht gemäß Fig. 4 bei weggelassenem Kunststoffanguß wieder.
Fig. 6 ist ein Schnitt entlang der Längsmittelebene gemäß Fig. 1.
Fig. 7 zeigt eine dritte Ausführungsvariante in Seitenansicht.
Fig. 8 gibt die Unteransicht bei strichliert angedeutetem Kunststoffanguß wieder.

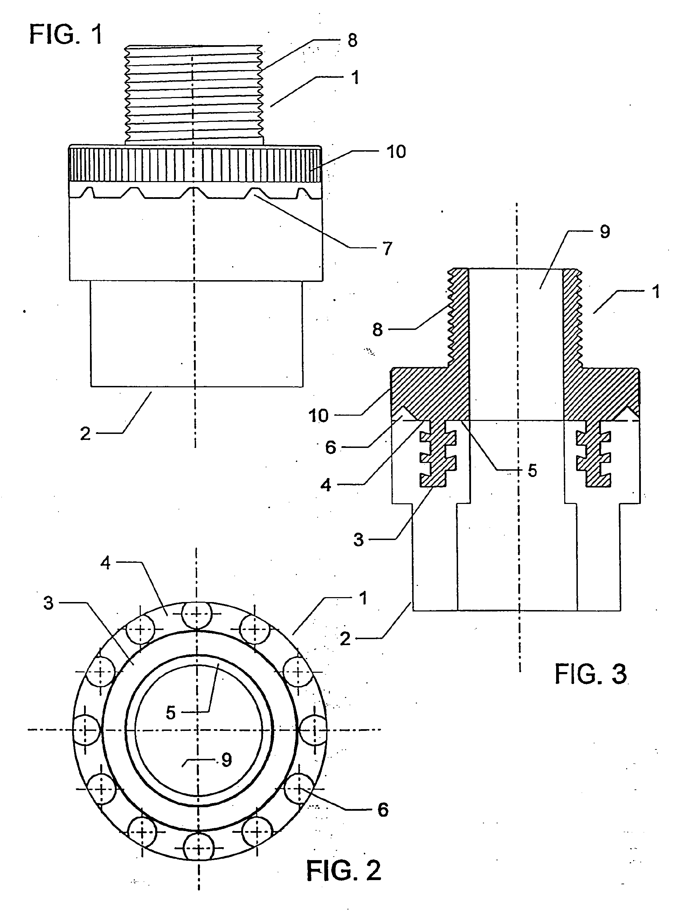

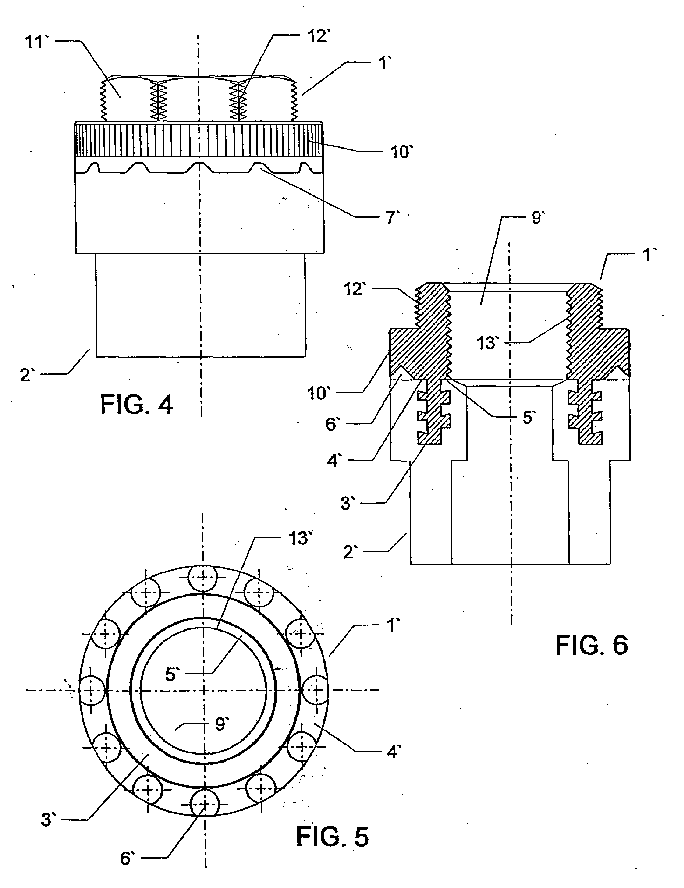

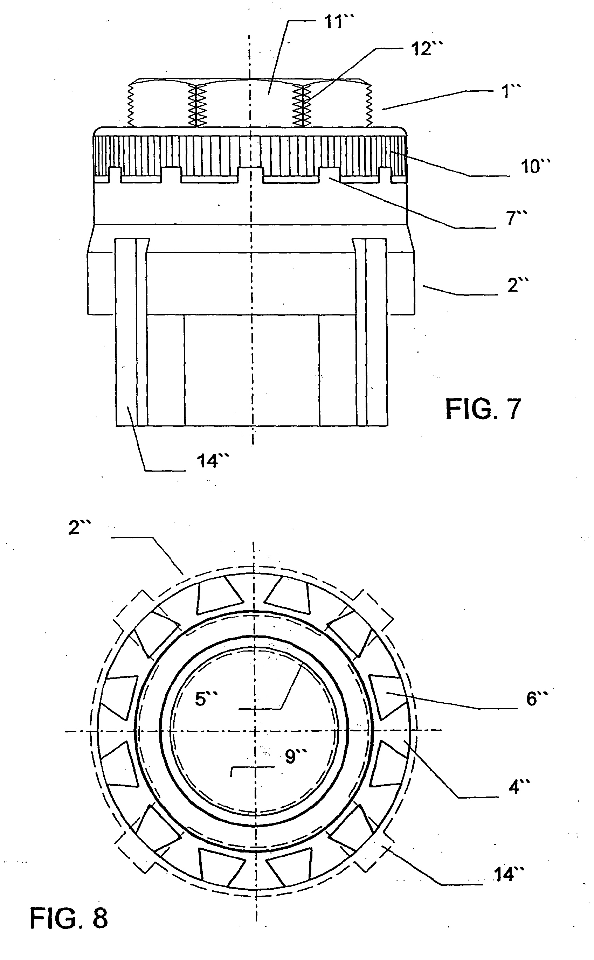

Das erfindungsgemäße Übergangsstück besteht aus zwei Teilen, nämlich einer metallischen bzw. aus sonstigem hartem Werkstoff gefertigte Anschlußhülse 1, 1', 1" und einer aus Kunststoffmaterial bestehenden Verbindungshülse 2, 2', 2". Als sonstiger harter Werkstoff ist beispielsweise armierter Kunststoff, wie mit Glasfasern, Stahlfasern oder Carbonfasern armierter Kunststoff, aber auch PVC, PSU, PVD sowie Glas, Keramik oder Sintermaterialien vorsehen. Die Verbindung zwischen den beiden Teilen erfolgt über einen achsial umlaufenden Fortsatz 3, 3' (bei den Fig. 7 und 8 ist analog ein solcher Fortsatz vorgesehen, jedoch nicht dargestellt), welcher sowohl an den Außenmantelflächen als auch an den Innenmantelflächen mit umlaufenden Rippen bzw. Rillen versehen ist, wobei die Zwischenräume zwischen den einzelnen Rippen bevorzugt schwalbenschwanzförmigen Querschnitt aufweisen. Derartige Verbindungen zwischen Anschlußhülsen und Verbindungshülsen sind Stand der Technik. Bei solchen Hülsen werden die Kunststoffrohre in das Innere der Verbindungshülse aus Kunststoff eingesetzt und mit dieser verschweißt, wobei - wie in den Fig. 3 und 6 wiedergegeben - Bereiche mit größerem Durchmesser für die Aufnahme der Kunststoffrohre versehen sind, sodaß der Innendurchmesser des Rohres durch den Innendurchmesser der Hülse nicht beschränkt wird bzw. umgekehrt.

Der umlaufende Fortsatz läßt sowohl an seiner Außenseite als auch an seiner Innenseite eine Schulter 4 bzw. 4', 4" und an seiner Innenseite eine Schulter 5, 5', 5" an der Anschlußhülse frei, an welcher Stirnfläche dann die Verbindungshülse aus Kunststoff anschließt. Um zu verhindern, daß sich die Verbindungshülse aus Kunststoff 2 relativ zur Anschlußhülse 1', 1" verdreht, sind in der äußeren Schulter Ausnehmungen 6, 6', 6" vorgesehen, die nach außen hin offen sind. Diese Ausnehmungen 6, 6', 6" werden durch Kunststoffvorsprünge 7, 7', 7" beim Anspritzen der Verbindungshülse aus Kunststoff ausgefüllt, wobei sich diese Kunststoffvorsprünge während des Spritzvorganges selbsttätig ausbilden und dabei die in den Ausnehmungen 6, 6', 6" befindliche Luft verdrängen.

Bei den Ausführungsbeispielen gemäß Fig. 1 bis 5 sind die Vorsprünge 6, 6' durch parallel zur Längsachse des Übergangsstückes verlaufende Bohrungen bzw. Rundfräsungen gebildet, wobei der Mittelpunkt der Bohrungen bzw. Rundfräsung dem Außenrand des Anschlußstückes 1 näher liegt als der Radius der Bohrung beträgt. Eine derartige Bohrung bzw. Fräsung kann dadurch eingebracht werden, daß der Bohrer bzw. Fräser so angesetzt ist, daß er nach außen frei läuft bzw. es werden in die Schultern zuerst Bohrungen eingebracht und dann die äußere Mantelfläche des metallischen Anschlußstückes durch Drehen oder Schleifen bearbeitet, womit eine Durchmesserverringerung erfolgt und damit die Wandungen der Bohrung abgetragen werden.

Beim Ausführungsbeispiel nach den Fig. 7 und 8 sind in Unteransicht schwalbenschwanzförmige Ausnehmungen 6" (Fig. 8) vorgesehen. Derartige Ausnehmungen können entweder während eines Gießvorganges ausgenommen bleiben, oder diese Ausnehmungen werden nachträglich durch Formfräsung eingebracht.

Beim Ausführungsbeispiel nach den Fig. 1 - 3 handelt es sich um ein einfaches Kupplungsstück, an welches ein Metallrohr mittels einer einfachen Überwurfmutter dicht angesetzt wird. Dadurch ist an der Außenwandung des metallischen Anschlußstückes ein Gewinde 8 vorgesehen. Die Innenwandung des Durchganges 9 ist ungearbeitet und glatt.

Beim Ausführungsbeispiel nach den Fig. 4 - 6 handelt es sich um sogenannte Übergangsstücke zum Anschluß von Armaturen u.dgl., welche an Wandplatten dadurch festgelegt sind, daß die Übergangsstücke durch Wandplatten durchgesteckt sind, die eine unrunde Durchgangsöffnung aufweisen. In vorliegendem Fall handelt es sich um regelmäßige polygonale Durchbrechungen, durch welche das Übergangsstück mit entsprechenden gegengeformten Durchgangsstücken, im vorliegenden Fall Achtkantausnehmungen, hindurchgesetzt sind. An den parallel zur Längserstreckung verlaufenden Kanten dieser durchzusteckenden Bereiche sind Gewinde 12' vorgesehen, auf welche Fixierungsmuttern aufschraubbar sind. An der Innenseite des Durchganges 9' ist ein Gewinde 13' vorgesehen, in welches herkömmliche Anschlußstücke für Armaturen usw. eingesetzt werden.

In analoger Weise ist die Ausführungsform nach den Fig. 7 und 8 ausgebildet, wobei das Achtkantstück mit 11" und das Gewinde für das Aufschrauben der Mutter mit 12" bezeichnet ist.

An der Außenwandung des metallischen Anschlußstückes 1, 1', 1" ist eine Außenrändelung 10, 10', 10" vorgesehen, um ein sicheres Angreifen mittels Rohrzange u.dgl. zu ermöglichen.

## Patentansprüche

1. Übergangsstück zum Verbinden von Kunststoffrohren mit aus metallischen bzw. sonstigen harten Werkstoffen gefertigten Armaturen, Rohren oder Anschlußstücken für Geräte, insbesondere im Sanitär- und Heizungsbereich, wobei das Übergangsstück eine metallische bzw. aus sonstigem hartem Werkstoff gefertigte Anschlußhülse mit wenigstens einem in der Mittelbohrung und/oder an der Außenmantelfläche vorgesehenen Anschlußgewinde aufweist, wobei die Anschlußhülse an dem dem Anschlußgewinde abgewandten Ende mit einem axial verlaufenden umlaufenden Fortsatz zur Verbindung mit einer Verbindungshülse aus Kunststoffmaterial versehen ist und wobei der Fortsatz an der Innenseite und an der Außenseite an der Anschlußhülse je eine umlaufende Schulter beläßt und sowohl an der Innenseite als auch an der Außenseite vom Kunststoffmaterial umgossen ist, **dadurch gekennzeichnet, daß** an der an der Außenseite und/oder an der an der Innenseite des Fortsatzes (3, 3', 3") umlaufenden Schulter (4, 4', 4" bzw. 5, 5', 5") zu der zugehörigen Begrenzungsfläche bzw. der Anschlußhülse (1, 1', 1") hin offene Ausnehmungen (6, 6', 6") vorgesehen sind.

2. Übergangsstück nach Anspruch 1, **dadurch gekennzeichnet, daß** die Ausnehmungen (6, 6') durch in Achsrichtung bzw. annähernd in Achsrichtung der Anschlußhülse (1, 1') eingebrachte Bohrungen bzw. Rundfräsungen gebildet sind, wobei die Entfernung der Mittelpunkte der Bohrungen bzw. Fräsungen (6, 6') von der zugehörigen äußeren bzw. inneren Begrenzungsfläche geringer als der Radius der Bohrung bzw. Fräsung ist.

3. Übergangsstück nach Anspruch 1, **dadurch gekennzeichnet, daß** die Ausnehmungen (6") durch radial oder achsial verlaufende, insbesondere einen schwalbenschwanzförmigen Querschnitt aufweisende, Einstiche bzw. Einformungen gebildet sind.
